# EUROPÄISCHE PATENTSCHRIFT

(11) **EP 2 498 339 B1**
(45) Veröffentlichungstag und Bekanntmachung des Hinweises auf die Patenterteilung: **18.12.2013**
(21) Anmeldenummer: 11305268.2
(22) Anmeldetag: 11.03.2011
(51) Int. Cl.: H01R 4/36, H01R 11/09, F16B 31/02, F16B 35/00

(54) **Anordnung mit einer Klemme und mindestens eine Klemmschraube**
Assembly with a terminal and at least one clamping screw
Ensemble avec une borne et au moins une vis de serrage

(43) Veröffentlichungstag der Anmeldung: 12.09.2012
(73) Patentinhaber: Nexans, 75008 Paris (FR)
(72) Erfinder: Markgraf, Volker, 95195, Röslau (DE); Zapf, Martin, 95473, Creußen (DE); Seebauer, Rainer, 95028, Hof (DE); Dr. Stauch, Gert, 95032, Hof (DE)
(74) Vertreter: Döring, Roger

(56) Entgegenhaltungen:
- EP-A1- 0 750 723
- GB-A- 2 406 626

## Beschreibung

Die Erfindung bezieht sich auf eine Anordnung mit einer als Rohrstück ausgeführten Klemme aus Metall und mindestens einer Klemmschraube zum Befestigen eines elektrischen Leiters in der Klemme welche in ihrer Wandung mindestens ein mit einem Gewinde versehenes Durchgangsloch zur Aufnahme der Klemmschraube hat, die in ihrem Aufbau mindestens ein Element zur Begrenzung der Kraft aufweist, welche mittels eines an der Klemmschraube angreifenden, eine Drehung um ihre Achse bewirkenden Werkzeugs auf dieselbe ausgeübt wird, wobei die Klemmschraube ein rohrförmiges, mit einem Außengewinde versehenes und in das Durchgangsloch der Klemme einschraubbares Kontaktteil aufweist, das an seinem einen axialen Ende eine zur Anlage an einem in der Klemme befindlichen elektrischen Leiterbestimmte Kontaktfläche hat, (EP 0 750 723 B1).

Eine derartige, auch als "Abreißschraube" bzw. "Abscherschraube" bezeichnete Klemmschraube - im folgenden kurz "Schraube" genannt - wird beispielsweise in der Starkstromtechnik zum Verbinden der elektrischen Leiter zweier Starkstromkabel eingesetzt. Zur Erzielung und Aufrechterhaltung eines elektrisch gut leitenden Kontakts, ist eine feste Verbindung zwischen den Leitem zweier Kabel und einer rohrförmigen Klemme aus Metall erforderlich, in welche die Leiter eingesteckt sind. Eine solche Klemme besteht mit Vorteil aus einer Aluminiumlegierung. Die feste Verbindung könnte durch Verwendung eines sogenannten Drehmomentschlüssels sichergestellt werden, der beim Anziehen der Schraube dann "durchdreht", wenn ein ausreichender Festsitz derselben erreicht ist. So ein Drehmomentschlüssel steht aber auf einer Baustelle oft nicht zur Verfügung. Die Schraube wird daher in der Regel mit einem anderen Werkzeug festgedreht, beispielsweise mit einem einfachen Schraubenschlüssel. Um sicherzustellen und auch um überprüfen zu können, daß die Schraube ausreichend fest angezogen ist, kann sie als Abscherschraube mit mindestens einer Sollbruchstelle ausgerüstet sein, die in ihrem axialen Verlauf als umlaufende Nut angeordnet ist. Der obere Teil der Schraube wird dann abgeschert, wenn die Festigkeit ihrer Sollbruchstelle erreicht ist bzw. überschritten wird. Der danach fehlende Schraubenkopf ist ein Indiz dafür, daß die Schraube ausreichend fest angezogen ist. Die Schraube ragt nach dem nichtodernurunwesentlich aus der Klemme heraus. Ein überderselben zu montierendes Isolierelement wird daherwedermechanisch beschädigt, noch in seinen Isoliereigenschaftenbeeinträchtigt. Die Sollbruchstelle unterbrichtaberdas Gewinde der Schraube, so daß dessen Tragfähigkeit geschwächt wird. Dasmacht sich um so mehrungünstig bemerkbar, je mehrderartige Sollbruchstellen bei einer Schraube vorhanden sind. Ein universeller Einsatz solcher Schrauben für Leiter unterschiedlichster Durchmesser ist d a he r nur mit Einschränkungen möglich. Es ist außerdemoftnicht zu vermeiden, daß Teile derabgescherten Schraube störend aus der Klemme herausragen.

Die Schraube nach dereingangs erwähnten EP 0 750 723 B1 weist in ihrem Verlauf mehrere, als umlaufende Nuten ausgebildete Sollbruchstellen auf, die parallel und mit axialem Abstand zueinanderim Gewindeteil der Schraube angeordnet sind. Die Schraube ist außerdem mit einem zentralen Sackloch mit polygonalem Querschnitt ausgerüstet, das bis in die Nähe deram nächsten zur Schraubenspitze liegenden Sollbruchstelle liegt. Zur Betätigung der Schraube ist ein Drehkörpervorgesehen, der a us einem zur Einführung in das Sacklochbestimmten Stift mit polygonalem Querschnitt und einerdenselben mit Abstand rundum umgebenden Haube besteht, an welcherder Stiftbefestigt ist und die außen eine Sechskantmutterzum Anlegen eines Werkzeugsaufweist. Für diese bekannte Schraube gilt wegen dergrößeren Anzahlvon Sollbruchstellen derbereits beschriebene Mangelderverminderten Tragfähigkeit in erhöhtem Maße. Außerdem ist auch diese Schraube nur fürdas Festlegen von Leitern mit vorgegebenen Abmessungen einsetzbar, wenn verhindert werden soll, daß Teile derabgescherten Schraube störend aus der Klemme herausragen.

Der Erfindung liegt die Aufgabe zugrunde, die eingangs geschilderte Schraube so zu g e sta lte n, daß sie ohne Einschränkung ihrer Tragfähigkeit zum Festlegen von in einer Klemme befindlichen Leitern mit beliebigen Abmessungengeeignet ist.

Diese Aufgabe wird gemäß der Erfindung dadurch gelöst,
- daß die Klemmschraube außerdem ein mit einem Innengewinde und einer Anlagefläche für das Werkzeugausgerüstetes, als Rohrstück a usg e führte s Betätigungsteil aufweist, das in Montageposition auf das Kontaktteil aufgeschraubt ist,
- daß das Betätigungsteil in Montageposition durch zumindest ein stiftartiges Halte teil fe st mit dem Kontaktteil verbunden ist, das in radialer Richtung verlaufend in den Wandungen beider Teile befestigt und mit einer Sollbruchstelle a usg e rüste t ist, und
- daß das Kontaktteil eine definierte Wandstärke hat, die nach Erreichen des Festsitzes der Klemmschraube in der Klemme durch ihre Drehung mittels des Werkzeugs und dadurchbedingtem Abscherendesstiftartigen Halteteils an dessen Sollbruchstelle zum Abreißen des aus der Klemme herausragenden Bereichs des Kontaktteils durch das mittels des Werkzeugsgedrehte Betätigungsteil führt.

Wesentlicher Teil dieser Schraube ist das Kontaktteil, welches die eigentliche Schraube zum Festlegen eines Leiters in einer Klemme ist. Das Betätigungsteil ist in Montageposition durch das stiftartige Halte teil mit dem Kontaktteil verbunden. Beide Teile bilden also in Montageposition eine Einheit. Die dadurch gebildete Schraube wird mittels eines am Betätigungsteil angreifenden Werkzeugs kontinuierlich so lange im Gewindeloch einer Klemme gedreht, bis die Kontaktfläche des Kontaktteils an einem in der Klemme befindlichen, einen beliebigen Durchmesseraufweisenden leiteranliegt und mit vorgegebener Kraftgegen denselbengepreßtwird. Sobald der gewünschte Festsitz des Kontaktteils bzw. der Schraube erreicht ist, wird das Halteteil abgeschert. Das Betätigungsteil kann dann auf dem Kontaktteilgedreht werden. Es wird beieiner Drehung in Richtung der Klemme bewegt. Das Kontaktteil wird abschließend durch das Betätigungsteilabgerissen, sobald dasse Ibe auf der Klemme aufliegt und mittels des Werkzeugs weitergedreht wird.

In bevorzugter Ausführungsform ist das stiftartige Halteteil eine Gewindeschraube mit einem Kopf und einem Gewindeschaft, zwischen denen sich eine umlaufende Einengung zur Erze ug ung der Sollbruchstelle befindet. Die Gewindeschraube ist in Montageposition mit ihrem Kopf in einer Ausnehmung in der Wandung des Betätigungsteils angeordnet und mit ihrem Gewindeschaft in ein Gewindeloch in der Wandung des Kontaktteils eingeschraubt ist.

Ein Ausführungsbeispiel des Erfindungsgegenstandes ist in d e n Zeichnung e n dargestellt.

Es zeigen:
Fig. 1 schematisch eine Verbindungsstelle zwischen den Leitern zweierelektrischer Kabel im Schnitt.
Fig. 2 die drei Teile einer Klemmschraube nach der Erfindung voneinandergetrennt.
Fig. 3 eine zur Klemmschraube gehörende Gewindeschraube in vergrößerter Darstellung.
Fig. 4 die KLemmschraube mit zusammengefügten Teilen.
Fig. 5 eine Draufsicht auf ein Betätigungsteil der Klemmschraube.
Fig. 6 bis 11 unterschiedliche Po sitio ne n der Klemmschraube bei ihrer Betätigung.

Im folgenden wird weiterstatt des Wortes "Klemmschraube" das kürzere Wort "Schraube" verwendet. Das Kontaktteil der Schraube besteht aus einem ausreichend festen, vorzugsweise elektrischgutleitenden Metall, b e isp ie lsw e ise aus Messing oder einer Aluminiumlegierung. Da s Betätigungsteil der Schraube kann beispielsweise aus Stahlbestehen.

Das in radialer Richtung in die Schraube einzusetzende stiftartige Halteteil kann eine beliebige Form haben, solange es in Montageposition die Verbindung von Kontaktteil und Betätigungsteil zu einer Einheitermöglicht. Stellvertretend für alle möglichen Ausführungsformen wird in derfolgenden Beschreibung statt des Wortes "Halteteil" das Wort "Gewindeschraube" verwendet. Es könnenauch zwei oder mehr, in Umfangsrichtung der Schraube gegeneinanderversetzte Gewindeschraubeneingesetzt werden.

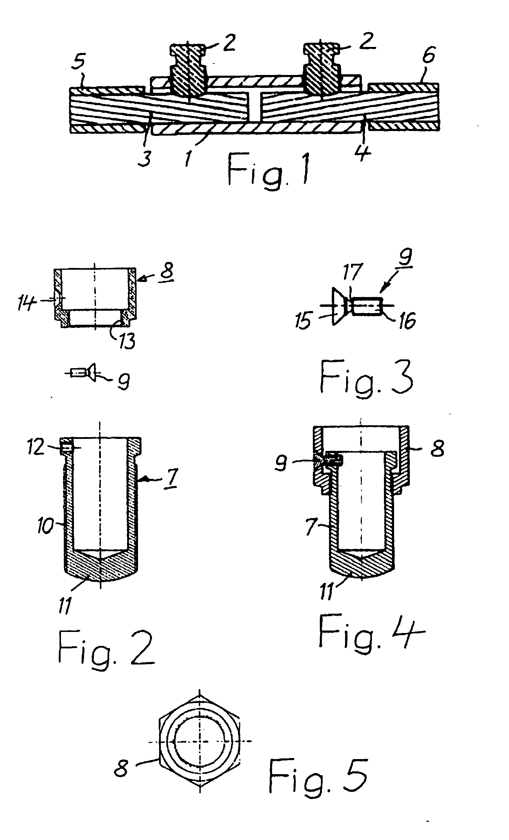

In Fig. 1 ist eine beispielsweise aus einer verzinnten Aluminiumlegierung bestehende, als Rohrstückausgerührte Klemme 1 dargestellt. Sie hat zwei Gewindebohrungen, in denen jeweils eine mit einem Außengewinde versehene Schraube 2 angeordnetist. In die Klemme 1 ragen von zwei unterschiedlichen Seiten herelektrische Leiter 3 und 4 zweier elektrischer Kabel 5 und 6 hinein, beidenen es sich insbesondere um Energiekabelhandelt. Sie sind in Montageposition durch die Schrauben 2 in der Klemme 1 festgelegt und dadurch elektrisch leitend mite inanderverbunden. Die elektrischen Leiter 3 und 4 sind in bevorzugter Ausführungsform als mehrdrähtige Leiter ausgeführt. Sie b e ste he n vorzugsweise aus Aluminium oder Kupfer. Die Leiter 3 und 4 können auch aus Segmenten aufgebautsein, in denen jeweils Einzeldrähte zusa mme ng e faßt sind.

Die Schraube 2 besteht aus dreimiteinanderzu verschraubenden Teilen, einem Kontaktteil 7, einem Betätigungsteil 8 und einer Gewindeschraube 9. Das Kontaktteil 7 ist als zylindrischer Hohlkörpermit einem Außengewinde 10 ausgeführt. Es hat eine zur Anlage an einem elektrischen Leiter 3 bzw. 4 bestimmte Kontaktfläche 11. An ihrem der Kontaktfläche 11 abgewandten Ende hat das Kontaktteil 7 in seiner Wandung mindestens ein Gewindeloch 12 zur Aufnahme der Gewindeschraube 9. Im Bereichdes Gewindelochs 12 ist die Wandung des Kontaktteils 7 vorzugsweise radialnach a uße n vorspringend geringfügig dicker ausgeführt. Das Außengewinde 10 endetvordiesem Bereich.

Das als Rohrstückausgeführte Betätigungsteil 8 hat ein Innenge winde 13 und in seiner Wandung ein Durchgangsloch 14 zur Aufnahme der Gewindeschraube 9. Das Innengewinde 13 des Betätigungsteils 8, mit welchem dasselbe in Montageposition gemäß Fig. 4 auf das Kontaktteil 7 aufgeschraubtist, erstreckt sich nur über einen Teilbereich des Betätigungsteils 8. Der Bereich desselben, in dem das Durchgangsloch 14 angeordnet ist, kann gegenüberdem Bereich mit dem Innengewinde 13 mit Vorteilradialerweitert und gewindefreisein, so wie es in den Zeichnungen dargestellt ist.

Das Betätigungsteil 8 kann gemäß Fig. 5 eine als Polygon, insbesondere als Se c hse c k, ausgeführte Umfangsfläche zur Anlage eines zum Drehen der Schraube 2 geeigneten Werkzeugs aufweisen. Die zentrale Öffnung des Betätigungsteils 8 kann zumindestim oberen Bereich aberauch einen polygonalen, vorzugsweise sechseckigen, Querschnitt zum Einsetzen eine s e ntsp re c he nd e n Werkzeugs aufweisen.

Die Gewindeschraube 9 hatgemäß Fig. 3 einen vorzugsweise konisch ausgeführten Kopf 15 und einen Gewindeschaft 16. Zwischen Kopf 15 und Gewindeschaft 16 befindetsich eine umlaufende Einengung 17, die für die Gewindeschraube 9 eine Sollbruchstelle darstellt.

Die Schraube 2 geht im Montage zustand a us Fig. 4 hervor. Das Betätigungsteil 8 ist dabei auf das Kontaktteil 7 aufgeschraubt. Beide Teile sind durch die Gewindeschraube 9 mit ein anderverbunden, die in das Gewindeloch 12 des Kontaktteils 7 ein geschraubtist und mit ihrem Kopf 15 im Durchgangsloch 14 d e s Betätigungsteils 8 liegt. Die Einengung 17 und d a mit die Sollbruchstelle d e r Gewindeschraube 9 liegtim Spalt zwisc he n Kontaktteil 7 und Betätigungsteil8.

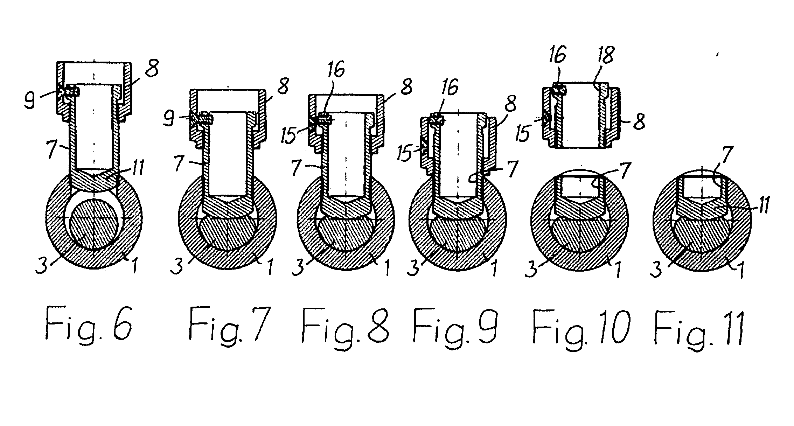

Die so fertiggestellte Schraube 2 wird entsprechend den Fig. 6 bis 11 beispielsweise wie folgt zum Befestigen eines elektrischen Leiters 3 in einer Klemme 1 gehandhabt:

Zunächst wird die gemäß Fig. 4 zusammengebaute Schraube 2 in ein Gewindeloch der Klemme 1 eingeschraubt, bis sie die aus Fig. 6 ersichtliche Position hat. Sie kann dann von Hand oder bereits mittels eines Werkzeugs ― einem handelsüblichen Schraubenschlüssel ― bis zur Anlage am Leiter 3 gebracht werden. Beim weiteren Drehen der Schraube 2 mittels des Werkzeugs wird der Leiter 3 zusammengedrückt (Fig. 7). Wenn die fürden Festsitz der Schraube 2 in der Klemme 1 erforderliche Anpreßkraft, bei ihrem weiteren Anzie he n erreicht ist oder überschritten wird, wird die Gewindeschraube 9 an ihrer Sollbruchstelle, der Einengung 17, abgeschert (Fig. 8).

Bei einerweiteren Drehung des Betätigungsteils 8 auf dem Kontaktteil 7, gelangt dasselbe bis zur Anlage an der Klemme 1 (Fig. 9). Wird e s in dieser Position mittels des Werkzeugs mit ausreichender Kraftweitergedreht, dann wird der aus der Klemme 1 herausragende Teil 18 des Kontaktteils 7 abgerissen (Fig. 10). Er kann zusammen mit dem Betätigungsteil 8 von der Klemme 1 abgehoben werden.

Damit der aus der Klemme 1 herausragende Teil des Kontaktteils 7 im geschilderten Sinne abgetrennt bzw. abgerissen werden kann, muß seine Wandstärke entsprechend bemessen sein. Sie muß nurgroß genug sein, damit das Kontaktteil 7 die fürden Festsitz der Schraube 2 auf dem Leiter3 erforderliche Kraftübertragen kann. Eine größere Wandstärke ist nicht erforderlich. In diesem Sinne ist die Wandstärke des Kontaktteils 7 in Abhängigkeit von der Größe derdurch das Werkzeug aufzubringenden Kraft zu bemessen. Die abschließende Position des festlegenden Teils des Kontaktteils 7 bzw. der Schraube 2 geht aus Fig. 11 hervor.

## Patentansprüche

1. Anordnung mit einer als Rohrstück ausgeführten Klemme (1) aus Metall und mindestens einer Klemmschraube (2) zum Befestigen eines elektrischen Leiters (3,4) in der Klemme, welche in ihrer Wandung mindestens ein mit einem Gewinde versehenes Durchgangsloch zur Aufnahme der Klemmschraube (2) hat, die in ihrem Aufbau mindestens ein Element zur Begrenzung der Kraft aufweist, welche mittels eines an der Klemmschraube (2) angreifenden, eine Drehung um ihre Achse bewirkenden Werkzeugs auf dieselbe ausgeübt wird, wobei
die Klemmschraube (2) ein rohrförmiges, mit einem Außengewinde (10) versehenes und in das Durchgangsloch der Klemme (1) einschraubbares Kontaktteil (7) aufweist, das an seinem einen axialen Ende eine zur Anlage an einem in der Klemme (1) befindlichen elektrischen Leiter (3,4) bestimmte Kontaktfläche (11) hat,
**dadurch gekennzeichnet**
- **daß** die Klemmschraube (2) außerdem ein mit einem Innengewinde (13) und einer Anlagefläche für das Werkzeug ausgerüstetes, als Rohrstück ausgeführtes Betätigungsteil (8) aufweist, das in Montageposition auf das Kontaktteil (7) aufgeschraubt ist,
- **daß** das Betätigungsteil (8) in Montageposition durch zumindest ein stiftartiges Halteteil fest mit dem Kontaktteil (7) verbunden ist, das in radialer Richtung verlaufend in den Wandungen beider Teile befestigt und mit einer Sollbruchstelle ausgerüstet ist, und
- **daß** das Kontaktteil (7) eine definierte Wandstärke hat, die nach Erreichen des Festsitzes der Klemmschraube (2) in der Klemme (1) durch ihre Drehung mittels des Werkzeugs und dadurch bedingtem Abscheren des Halteteils an dessen Sollbruchstelle zum Abreißen des aus der Klemme (1) herausragenden Bereichs des Kontaktteils (7) durch das mittels des Werkzeugs gedrehte Betätigungsteil (8) führt.

2. Anordnung nach Anspruch 1, **dadurch gekennzeichnet,**
- **daß** das stiftartige Halteteil eine Gewindeschraube (9) mit einem Kopf (15) und einem Gewindeschaft (16) ist, zwischen denen sich eine umlaufende Einengung (17) zur Erzeugung der Sollbruchstelle befindet, und
- **daß** die Gewindeschraube (9) in Montageposition mit ihrem Kopf (15) in einem Durchgangsloch (14) in der Wandung des Betätigungsteils (8) angeordnet und mit ihrem Gewindeschaft (16) in ein Gewindeloch (12) in der Wandung des Kontaktteils (7) eingeschraubt ist.

## Claims

1. Device with a metallic clamp (1), which has the form of a piece of a tube and comprises at least one clamping screw (2), for the fastening of at least one electrical conductor (3,4) within the clamp, which clamp has in its wall at least one throughhole provided with a thread for receiving the clamping screw (2), which clamping screw has at least one element for limiting the force which can be exerted by a tool on same and effects a rotation about its axis, wherein the clamping screw (2) has a contact part (7) provided with a bore hole and an external thread (10) and being adapted to be screwed into the throughhole of the clamp (1), which contact part (7) has at its one axial end a contact surface (11) intended for contacting an electrical conductor (3,4), which is positioned in the clamp (1), **characterized in**
- **that** the clamping screw (2) also has an actuating member (8) in form of a piece of a tube which comprises an internal thread (13) and a contact surface for the tool, which in mounting position is screwed onto the contact part (7),
- **that** the actuating member (8) in mounting position is fixed to the contact part (7) by at least one pin like fixing element, which extends in radial direction and is fastened in the walls of the two parts and which has a breaking point, and
- **that** the contact part (7) has a defined wall thickness which, after reaching the tight seat of the clamping screw (2) in the clamp (1), by rotation of the tool and the resulting shearing-off of the fixing element at its breaking point causes the tearing off of the portion of the contact part (7) protruding from the clamp (1) by the actuating member (8) rotated by means of the tool.

2. Device according to claim 1, **characterized in**
- **that** the pin like fixing element is a screw (9) with a head (15) and a shaft (16) between which a circular narrowing (17) is positioned to form the breaking point and
- **that** the screw (9) in mounting position is placed with its head (15) within a throughhole (14) in the wall of the actuating member (8) and screwed with its shaft (16) into a threaded hole (12) in the wall of the contact part (7).

## Revendications

1. Ensemble avec une borne (1) en métal prenant la forme d'une pièce tubulaire et avec au moins une vis de serrage (2) pour la fixation d'un conducteur électrique (3, 4) dans la borne, ladite borne ayant dans sa paroi au moins un trou traversant pourvu d'un filetage servant à recevoir la vis de serrage (2) comportant dans sa structure au moins un élément permettant de limiter la force s'exerçant par le biais d'un outil s'engrenant au niveau de la vis de serrage (2) et provoquant une rotation autour de son axe, dans lequel la vis de serrage (2) comporte une partie de contact (7) en forme de tube pourvue d'un filetage extérieur (10) et pouvant être vissée dans le trou traversant de la borne (1), ladite partie ayant au niveau de son extrémité axiale une surface de contact (11) prévue pour appuyer contre un conducteur électrique (3, 4) se trouvant dans la borne (1),
**caractérisé en ce**
- **que** la vis de serrage (2) comprend en outre une partie d'actionnement (8) prenant la forme d'une pièce tubulaire, equipée d'un filetage intérieur (13) et d'une surface d'appui pour l'outil, et étant vissée, en position de montage, sur la partie de contact (7) ;
- **que** la partie d'actionnement (8) étant connectée fixement à la partie de contact (7) , en position de montage, par au moins une partie de retenue en forme de goupille, la partie de contact étant fixée dans les parois des deux parties en s'étendant dans la direction radiale et étant munie d'un point de rupture théorique ; et
- **que** la partie de contact (7) a une épaisseur de paroi définie qui conduit, après avoir atteint le point de fixation de la vis de serrage (2) dans la borne (1) par le biais de sa rotation à l'aide de l'outil et ainsi le cisaillement défini de la partie de retenue, à son point de rupture théorique, à l'arrachement de la zone de la partie de contact (7) ressortant de la borne (1) au moyen de la partie d'actionnement (8) tournée à l'aide de l'outil.

2. Ensemble selon la revendication 1, **caractérisé en ce**
- **que** la partie de retenue en forme de goupille est une vis filetée (9) avec une tête (15) et une tige filetée (16), entre lesquelles se trouve un rétrécissement (17) périphérique pour produire le point de rupture théorique, et
- **que** la vis filetée (9) est disposée en position de montage avec sa tête (15) dans un trou traversant (14) dans la paroi de la partie d'actionnement (8) et est vissée avec sa tige filetée (16) dans un trou fileté (12) dans la paroi de la partie de contact (7).
